# EUROPEAN PATENT APPLICATION

(11) **EP 2 980 940 A1**
(43) Date of publication of application: **03.02.2016**
(21) Application number: 14775850.2
(22) Date of filing: 12.03.2014
(51) Int. Cl.: H02G 15/02, B60K 6/22, B60L 11/18, B60W 10/26, B60W 20/00, H02J 7/00

(54) **CHARGING CABLE LOCKING DEVICE AND CONTROLLER**

(30) Priority: 28.03.2013 JP 2013068158
(71) Applicant: Kabushiki Kaisha Tokai Rika Denki Seisakusho, Ohguchi-cho Niwa-gun Aichi 480-0195 (JP); TOYOTA JIDOSHA KABUSHIKI KAISHA, Toyota-shi, Aichi 471-8571 (JP)
(72) Inventor: KIMURA, Akihito, Niwa-gun Aichi 480-0195 (JP); YAMAMOTO, Keiji, Niwa-gun Aichi 480-0195 (JP); IEDA, Takashi, Niwa-gun Aichi 480-0195 (JP); TOBIMATSU, Tadayuki, Niwa-gun Aichi 480-0195 (JP); KOJIMA, Koichi, Toyota-shi Aichi 471-8571 (JP)
(74) Representative: TBK
(86) International application number: PCT/JP2014/056450
(87) International publication number: WO 2014/156639

(57) **Abstract**

A charging cable locking device (31) locks or unlocks a charging cable (22) in association with the locking and unlocking of a vehicle door (13). In the charging cable locking device, a power supply plug (26) of the charging cable (22) is joined to an inlet (25) provided in a power supply opening (23), and the charging cable (22) is locked when a state in which a battery (27) is being charged by power supplied from the charging cable (22) continues for a predetermined time.

## Description

The present invention relates to a charging cable lock device and a controller.

In recent years, vehicles that reduce CO₂ emissions, such as a plug-in hybrid vehicle and an electric vehicle, are becoming popular. The body of such a vehicle includes a power supply port, which is used to charge an installed battery for traveling. When charging the traveling battery, a charging cable extending from a charging facility is connected to the power supply port. Usually, much time is needed to charge the battery. Thus, to prevent replacement, theft, or the like of the charging cable, there is a trend of providing the charging cable with a charging cable lock device, which locks the charging cable to the vehicle body.

For example, patent document 1 proposes a charging cable lock device that locks and unlocks a charging cable when vehicle doors are locked and unlocked. This allows a user to lock the charging cable just by locking the vehicle doors when leaving the vehicle.

Patent Document 1: Japanese Laid-Open Patent Publication No. 2009-81917

However, in the charging cable lock device of patent document 1, when the user leaves the vehicle without locking the vehicle door, the charging cable may be left unlocked. In this case, the charging cable may be replaced, stolen, or the like.

This problem is not limited to a charging cable lock device that locks and unlocks a charging cable when vehicle doors are locked and unlocked. This problem also occurs when a user locks the charging cable with a charging cable lock device that is operated separately from the locking and unlocking of the vehicle doors.

It is an object of the present invention to provide a charging cable lock device that prevents or deters replacement, theft, or the like of a charging cable.

One aspect of the present invention provides a charging cable lock device adapted to lock a charging cable to a power supply port in a manner restricting removal of the charging cable from the power supply port. The charging cable lock device includes a lock controller that locks the charging cable when a power supply plug of the charging cable is continuously coupled to an inlet arranged in the power supply port for a predetermined time.

In the above configuration, when the charging cable is continuously connected to the inlet for the predetermined time, the lock controller automatically locks the charging cable. This prevents or decreases a situation in which the charging cable is left unlocked even when a user forgets to lock the charging cable. Thus, for example, replacement, theft, or the like of the charging cable may be prevented or deterred.

In one example, the lock controller locks or unlocks the charging cable when a vehicle door is locked or unlocked. This configuration allows a user to lock the charging cable just by locking the vehicle doors when leaving the vehicle.

In one example, when a state in which the charging cable is connected to the inlet and a battery is charged with power supplied from the charging cable continues for a predetermined time, the lock controller locks the charging cable. This configuration prevents or decreases situations in which the charging cable is left unlocked when charging the battery. Thus, for example, replacement, theft, or the like of the charging cable may be prevented or deterred during the charging of the battery.

In one example, the lock controller is configured to start measurement with a timer when the power supply plug is coupled to the inlet but the charging cable is unlocked, monitor a length of time in which the unlocked power supply plug is coupled to the inlet, and output a charging cable auto-lock instruction to automatically lock the charging cable when the length of time measured by the timer reaches a time limit.

The present invention further provides a charging cable lock controller adapted for use with a power supply port, which is connected to a charging cable, and a battery, which is charged through the charging cable. The charging cable lock controller is configured to monitor whether or not the charging cable is in a coupled state, in which the charging cable is coupled to the power supply port. When the charging cable is in the coupled state, the charging cable lock controller is configured to start measurement with a timer at a point of time when the charging cable is unlocked and monitor a length of time in which the unlocked charging cable is in the coupled state. The charging cable lock controller is configured to output a charging cable auto-lock instruction to automatically lock the charging cable when the length of time measured by the timer reaches a time limit.

In one example, the charging cable lock controller is configured to monitor whether or not the battery is being charged through the charging cable. When the battery is being charged, the charging cable lock controller is configured to start measurement with a timer at a point of time when the charging cable is unlocked and monitor a length of time in which the battery is being charged while the charging cable is unlocked. The charging cable lock controller is configured to output a charging cable auto-lock instruction to automatically lock the charging cable when a length of time measured by the timer reaches a time limit.

In one example, the charging cable lock controller further includes a communication interface used to communicate with a door lock control circuit that controls locking and unlocking of a vehicle door. The charging cable lock controller is configured to output a charging cable normal locking instruction when the door lock control circuit performs a door locking operation, output a charging cable normal unlocking instruction when the door lock control circuit performs a door unlocking operation, and output the charging cable auto-lock instruction when a length of time measured by the timer reaches the time limit regardless of the door locking operation performed by the door lock control circuit.

In a preferred example, a charging cable lock device is adapted for use with a power supply port, which is connected to a charging cable, and a battery, which is charged through the charging cable. The charging cable lock device includes a lock member, an actuator, and a charging cable lock controller. The lock member moves between a locking position, where the lock member locks and restricts removal of the charging cable to and from the power supply port, and an unlocking position, where the lock member unlocks the charging cable. The actuator moves the lock member between the locking position and the unlocking position. The charging cable lock controller is connected to the actuator. The charging cable lock controller is configured to monitor whether or not the charging cable is in a coupled state, in which the charging cable is coupled to the power supply port. When the charging cable is in the coupled state, the charging cable lock controller is configured to start measurement with a timer at a point of time when the charging cable is unlocked and monitor a length of time in which the unlocked charging cable is in the coupled state. The charging cable lock controller is configured to provide the actuator with a charging cable auto-lock instruction to automatically lock the charging cable when the length of time measured by the timer reaches a time limit.

In one example, the charging cable lock controller is configured to monitor whether or not the battery is being charged through the charging cable. When the battery is being charged, the charging cable lock controller is configured to start measurement with a timer at a point of time when the charging cable is unlocked and monitor a length of time in which the battery is being charged while the charging cable is unlocked. The charging cable lock controller is configured to output a charging cable auto-lock instruction to automatically lock the charging cable when the length of time measured by the timer reaches a time limit.

In one example, the charging cable lock controller includes a communication interface used to communicate with a door lock control circuit that controls locking and unlocking of a vehicle door. The charging cable lock controller is configured to provide the actuator with a charging cable normal locking instruction when the door lock control circuit performs a door locking operation, provide the actuator with a charging cable normal unlocking instruction when the door lock control circuit performs a door unlocking operation, and provide the actuator with the charging cable auto-lock instruction when the length of time measured by the timer reaches the time limit regardless of the door locking operation performed by the door lock control circuit.

The present invention obtains a charging cable lock device that prevents or deters replacement, theft, or the like of a charging cable.
Fig. 1 is a block diagram showing one embodiment of an electronic key system and a charging cable lock device.
Fig. 2 is a perspective view showing a power supply port of the embodiment.
Fig. 3 includes schematic diagrams illustrating operations of the charging cable lock device.

One embodiment of a charging cable lock device will now be described with reference to the drawings.

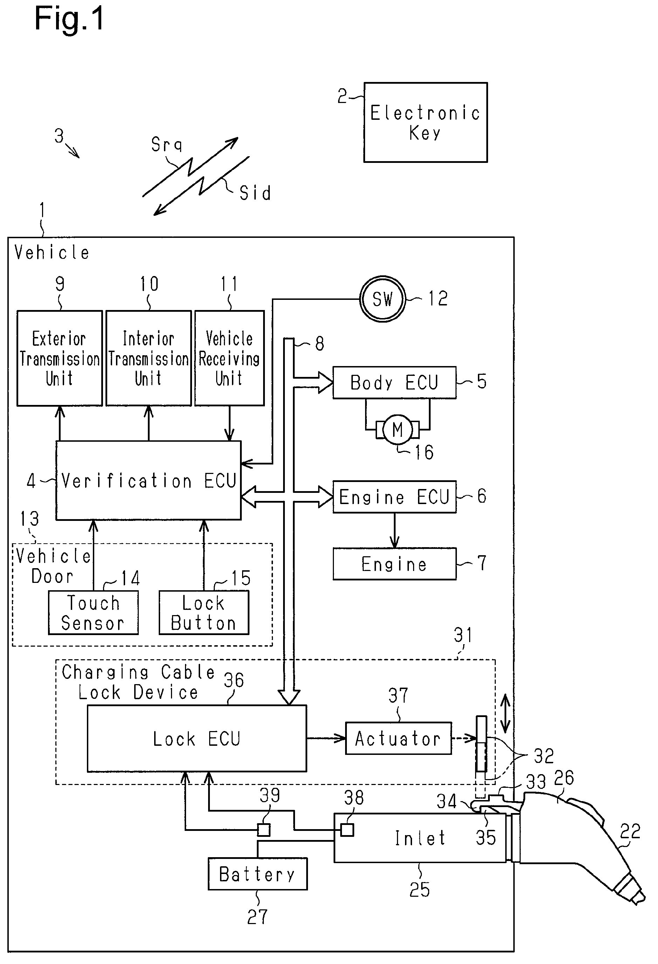

As shown in Fig. 1, a vehicle 1 includes an electronic key system 3. The electronic key system 3 may be a key operation-free system that performs an ID verification (smart verification) on an electronic key 2 through a short-range wireless communication (communication distance: a few meters) started by a wireless signal transmitted from the vehicle 1. The electronic key 2 refers to a key apparatus that is capable of transmitting its registered electronic key ID through wireless communication.

The vehicle 1 includes a verification electronic controller (ECU) 4 performing verification of the electronic key ID, a body ECU 5 controlling vehicle components, and an engine ECU 6 controlling an engine 7, which are connected by a bus 8 arranged in the vehicle. The verification ECU 4 includes a memory that stores an electronic key ID of the electronic key 2 registered in the vehicle 1. The verification ECU 4 is connected to an exterior transmission unit 9 transmitting a radio wave on a low frequency (LF) band to the outside of the vehicle, an interior transmission unit 10 transmitting a radio wave on a LF band to the inside of the vehicle, and a vehicle receiving unit 11 receiving a radio wave on an ultra-high frequency (UHF) band. The verification ECU 4 is connected to a push momentary-type engine switch 12 that is manually operated to start the engine 7, a touch sensor 14 detecting an operation for unlocking a door, and a lock button 15 detecting an operation for locking the door. The touch sensor 14 and the lock button 15 are arranged on a vehicle exterior door handle. The body ECU 5 is connected to a door lock motor 16 included in a door lock device.

When the vehicle is parked, the exterior transmission unit 9 transmits, to the outside of the vehicle, a request signal Srq that requests for transmission of the electronic key ID. When receiving the request signal Srq, the electronic key 2 responds with an ID signal Sid. The ID signal Sid includes an electronic key ID unique to the electronic key 2 and is, for example, a UHF signal. When the vehicle receiving unit 11 receives the ID signal Sid, the verification ECU 4 performs the ID verification (vehicle exterior smart verification) using the electronic key ID included in the ID signal Sid. When the verification is accomplished, the body ECU 5 allows or performs the locking and unlocking of the door lock device. For example, when a vehicle door 13 is locked and the vehicle exterior smart verification is accomplished, subsequently, the touch sensor 14 may detect touching of the vehicle exterior door handle. In this case, the body ECU 5 drives the door lock motor 16 to unlock the vehicle door 13. On the other hand, when the vehicle door 13 is unlocked and an operation of the lock button 15 is detected, the body ECU 5 drives the door lock motor 16 to lock the vehicle door 13.

When the electronic key 2 is located in the vehicle, the verification ECU 4 transmits the request signal Srq from the interior transmission unit 10 and performs the ID verification (vehicle interior smart verification) in the same manner as the vehicle exterior smart verification. When the vehicle interior smart verification is accomplished, the verification ECU 4 allows the engine switch 12, which is arranged near the driver seat, to perform a power shifting operation (engine starting operation) on the vehicle 1.

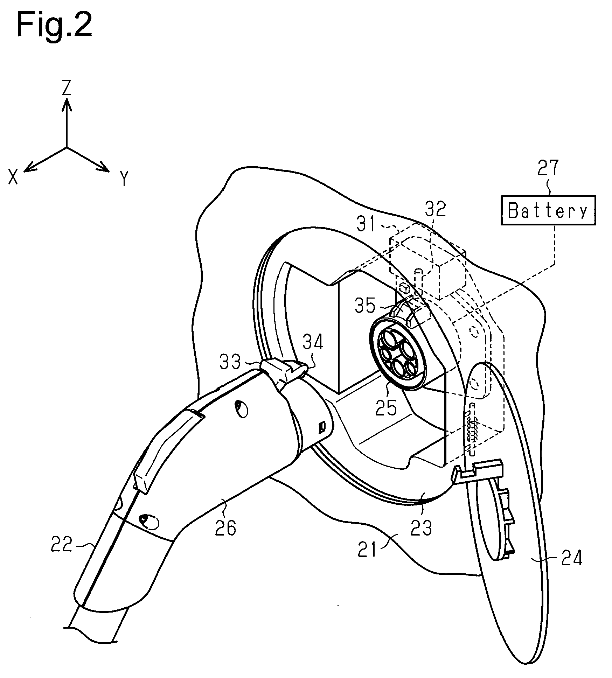

For example, a power supply port 23 is arranged in a vehicle body 21 of a vehicle including a battery such as a plug-in hybrid vehicle and an electric vehicle. In one example shown in Fig. 2, the power supply port 23 includes a power receiving connector or an inlet 25, and a charging cable 22 includes a distal end, which functions as a power supply connector or a power supply plug 26 and is connected to the inlet 25. The vehicle 1 includes a battery 27, which is charged through the charging cable 22. The power supply port 23 may include a lid 24, which can open and close.

An upper portion of the power supply port 23 includes a charging cable lock device 31 that locks the charging cable 22, which is connected to the power supply port 23, to prevent the removal of the charging cable 22 from the power supply port 23. The charging cable lock device 31 includes a lock pin 32 that moves between an unlocking position and a locking position. The lock pin 32 moves back and forth, for example, in the longitudinal direction (Z-axis direction in Fig. 2). When the charging cable 22 is connected to the inlet 25, a rotational lock arm 33 included in the power supply plug 26 is rotated in a closing direction by an urging member (not shown). Then, a distal hook 34 of the lock arm 33 is engaged with a projection 35 of the inlet 25. The charging cable lock device 31 moves the lock pin 32 to the locking position to press the hook 34 of the lock arm 33, which is engaged with the projection 35 of the inlet 25, from above. In this condition, the power supply plug 26 is not removable from the inlet 25.

As shown in Fig. 1, the charging cable lock device 31 includes a lock ECU 36 and an actuator 37 that moves the lock pin 32. The lock ECU 36 may include a communication interface to communicate with the verification ECU 4 and the body ECU 5 via the bus 8. The lock ECU 36, which is connected to the actuator 37, locks or unlocks the charging cable 22 by driving the actuator 37 to move the lock pin 32 to the locking position or the unlocking position. The inlet 25 includes a plug connection detecting sensor 38 detecting that the power supply plug 26 is completely fitted into the inlet 25. A charge detecting sensor 39 is arranged to detect whether or not the battery 27 is being charged based on current flowing to an electric wire connecting the inlet 25 and the battery 27.

The lock ECU 36 is configured to lock or unlock the charging cable 22 when the vehicle door 13 is locked or unlocked. For example, when the inlet 25 is connected to the power supply plug 26 and the body ECU 5 drives the door lock motor 16 to perform the locking operation, which switches the vehicle door 13 from the unlocked state to the locked state, the lock ECU 36 drives the actuator 37 to lock the charging cable 22. In contrast, when the charging cable 22 is connected to the inlet 25 and the body ECU 5 drives the door lock motor 16 to perform the unlocking operation, which switches the vehicle door 13 from the locked state to the unlocked state, the lock ECU 36 drives the actuator 37 to unlock the charging cable 22. Additionally, in some examples, for example, after the charging cable 22 is connected to the inlet 25, the lock ECU 36 locks or unlocks the charging cable 22 when detecting an operation performed on a locking switch or an unlocking switch located in the power supply port 23 or the like.

When the charging cable 22 is locked and then unlocked, the power supply plug 26 is connected to the inlet 25 and the battery 27 is continuously charged with power supplied from the charging cable 22 for a predetermined time (e.g., approximately 30 seconds). In this case, the lock ECU 36 automatically locks the charging cable 22 even when the doors are not locked by the ECUs 4, 5 or the lock switch. In the example shown in the drawings, the lock ECU 36 monitors whether or not the power supply plug 26 is coupled to the inlet 25 based on a detection signal of the plug connection detecting sensor 38 and monitors whether or not the battery 27 is being charged based on a detection signal of the charge detecting sensor 39. The lock ECU 36 may be referred to as a lock controller or a charging cable lock controller.

The operation of the charging cable lock device will now be described.

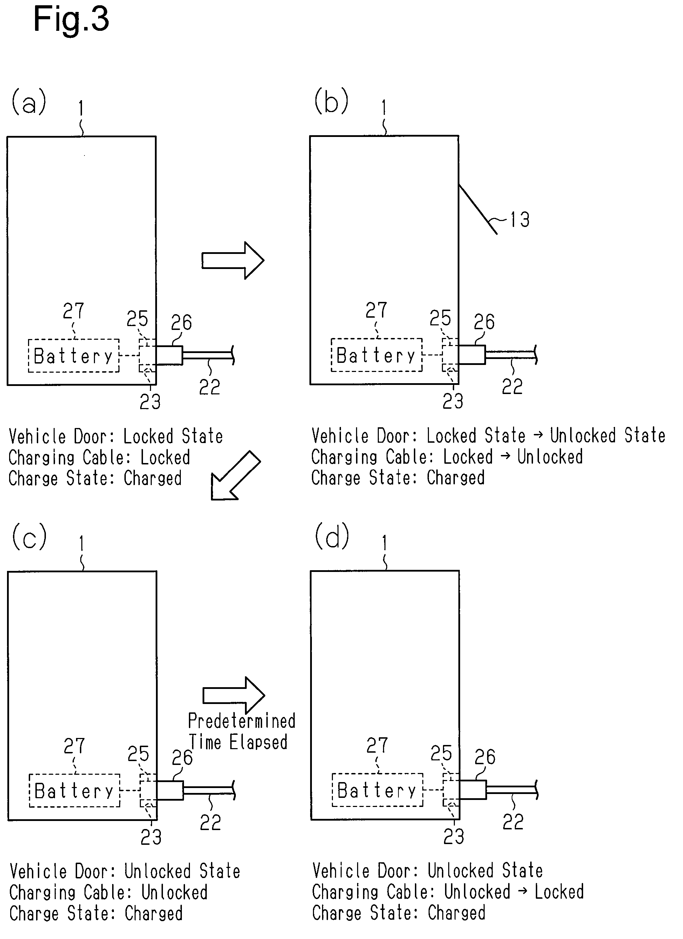

As shown in state (a) of Fig. 3, when a user starts charging the battery 27 by connecting the power supply plug 26 of the charging cable 22 to the inlet 25 and then locks the vehicle door 13, the charging cable 22 is locked when the doors are locked. Later, the user may unlock the vehicle door 13, for example, to take out baggage from the vehicle. In this case, as shown in state (b) of Fig. 3, the charging cable 22 is unlocked when the doors are unlocked. As shown in state (c) of Fig. 3, the user may forget to lock the vehicle door 13 and leave the vehicle 1. In this case, when a state, in which the power supply plug 26 is connected to the inlet 25 and the battery 27 is charged, continues for the predetermined time, the charging cable lock device 31 automatically locks the charging cable 22 (state (d) of Fig. 3). In this manner, the charging cable lock device 31 of the embodiment prevents or decreases situations in which the charging cable 22 is left unlocked.

The embodiment has the advantages described below.
(1) Situations in which the charging cable 22 is left unlocked are prevented or decreased during the charging of the battery 27. This prevents or deters replacement, theft, or the like of the charging cable 22 during the charging of the battery 27.
(2) The lock ECU 36 locks or unlocks the charging cable 22 when the vehicle door 13 is locked or unlocked. This allows a user to lock the charging cable 22 just by locking the vehicle door 13 when leaving the vehicle 1 and improves convenience.

For example, the above embodiment may be modified as follows.

For example, the lock ECU 36 may be configured to start measurement with a timer at a point of time when the charging cable 22 is unlocked in a coupled state, in which the charging cable 22 is coupled to the power supply port 23. In this example, the lock ECU 36 monitors the length of time when the charging cable 22 is in the coupled state and the unlocked state.

In another example, the lock ECU 36 starts measurement with the timer at a point of time when the charging cable 22 is unlocked in a charging state, in which the battery 27 is charged through the charging cable 22. In this example, the lock ECU 36 monitors the length of time when the battery is in the charging state and the charging cable 22 is in the unlocked state.

In any example, the timer may be a software timer function included in the lock ECU 36 or a timer apparatus connected to the lock ECU 36. When the length of time measured by the timer reaches a time limit, the lock ECU 36 provides a charging cable auto-lock instruction to the actuator 37 and automatically locks the charging cable 22. The time limit may be set or stored in the lock ECU 36 in advance.

In another preferred example, the lock ECU 36 is configured to provide the actuator 37 with an instruction for locking the charging cable 22 (charging cable normal locking instruction) when a door locking operation is performed by a door lock control circuit such as the ECUs 4, 5. Also, the lock ECU 36 is configured to provide the actuator 37 with an instruction for unlocking the charging cable 22 (charging cable normal unlocking instruction) when a door unlocking operation is performed by the door lock control circuit. In this example, regardless of the door locking operation performed by the door lock control circuit, when the length of time measured by the timer reaches the time limit, the lock ECU 36 provides the actuator 37 with the charging cable auto-lock instruction and automatically locks the charging cable 22.

The lock ECU 36 may include a microcomputer including software configured to execute the operations described in the present specification.

After the power supply plug 26 is connected to the inlet 25, the lock ECU 36 does not have to monitor whether or not the charging cable 22 is once locked. In this example, the lock ECU 36 may be configured to lock the charging cable 22 when a state, in which the charging cable 22 is connected to the charging cable 22 in the unlocked state and the battery 27 is charged, continues for the predetermined time.

The lock ECU 36 may be configured to lock the charging cable 22 when the charging cable 22 is continuously connected to the inlet 25 for the predetermined time regardless of whether or not the battery 27 is being charged.

The lock ECU 36 may be configured to lock or unlock the charging cable 22, for example, only when the locking switch or the unlocking switch is operated rather than when the vehicle door 13 is locked or unlocked.

In the embodiment, the plug connection detecting sensor 38, which is arranged in the inlet 25, detects whether or not the charging cable 22 is connected. Instead, for example, a switch or the like may be arranged in the charging cable 22 and detect the connection of the charging cable 22.

In the embodiment, the charge detecting sensor 39 detects whether or not the battery 27 is being charged based on the current flowing to the electric wire connecting the inlet 25 and the battery 27. Instead, for example, the charging of the battery 27 may be detected based on the voltage applied to the wire or the like.

Instead of the key operation-free system, the electronic key system 3 may include, for example, a wireless key system or a near field wireless system. The near field wireless communication system performs bidirectional verification through near field wireless communication (communication distance: a few centimeters to some tens of centimeters) and includes, for example, an immobilizer system and a near field communication (NFC) system.

The electronic key system 3 may use a radio wave having a frequency other than LF or UHF.

Although, the actuator 37 of the charging cable lock device 31 is not particularly limited, for example, a motor or a solenoid may be used.

The mechanical elements of the charging cable lock device 31 are not particularly limited as long as a lock member such as the lock pin 32 is movable in locking and unlocking directions. For example, instead of the lock pin 32, the lock member may include a rotational rod member that has a slit. In this case, in the rod member, a slit-free portion fixes the lock arm 33, and a slit portion allows for the operation of the lock arm 33. The lock member may be a sectoral plate member and rotate to the locking position and the unlocking position.

For example, the charging cable lock device 31 may be of a normally unlock urging type, in which the lock pin 32 is normally urged in the unlocking direction by an urging member. Alternatively, the charging cable lock device 31 may be of a normally lock urging type, in which the lock pin 32 is normally urged in the locking direction by the urging member.

The charging cable lock device 31 may be of a direct coupling type, in which the lock pin 32 and a support portion of the lock pin 32 are coupled, for example, by a projection and a sloped groove. In this case, when the support portion moves, the lock pin 32 is guided by the projection and the groove to move to the locking position and the unlocking position.

The charging cable lock device 31 may have a structure in which, for example, the lock pin 32 is directly engaged with a casing (main body) of the power supply plug 26 so that the locked state is set.

The principles of the present invention may exist in less features than the entire features disclosed in specific embodiments. The scope of the claims is incorporated in the detailed description, and each claim represents a separate embodiment. The present invention should be determined with reference to the scope of the claims along with the entire scope of their equivalents.

## Claims

1. A charging cable lock device adapted to lock a charging cable to a power supply port in a manner restricting removal of the charging cable from the power supply port, the charging cable lock device comprising:
a lock controller that locks the charging cable when a power supply plug of the charging cable is continuously coupled to an inlet arranged in the power supply port for a predetermined time.

2. The charging cable lock device according to claim 1, wherein the lock controller locks or unlocks the charging cable when a vehicle door is locked or unlocked.

3. The charging cable lock device according to claim 1 or 2, wherein when a state in which the charging cable is connected to the inlet and a battery is charged with power supplied from the charging cable continues for a predetermined time, the lock controller locks the charging cable.

4. The charging cable lock device according to any one of claims 1 to 3, wherein the lock controller is configured to
start measurement with a timer when the power supply plug is coupled to the inlet but the charging cable is unlocked,
monitor a length of time in which the unlocked power supply plug is coupled to the inlet, and output a charging cable auto-lock instruction to automatically lock the charging cable when the length of time measured by the timer reaches a time limit.

5. A charging cable lock controller adapted for use with a power supply port, which is connected to a charging cable, and a battery, which is charged through the charging cable, wherein:
the charging cable lock controller is configured to monitor whether or not the charging cable is in a coupled state, in which the charging cable is coupled to the power supply port;
when the charging cable is in the coupled state, the charging cable lock controller is configured to start measurement with a timer at a point of time when the charging cable is unlocked and monitor a length of time in which the unlocked charging cable is in the coupled state; and
the charging cable lock controller is configured to output a charging cable auto-lock instruction to automatically lock the charging cable when the length of time measured by the timer reaches a time limit.

6. The charging cable lock controller according to claim 5, wherein:
the charging cable lock controller is configured to monitor whether or not the battery is being charged through the charging cable;
when the battery is being charged, the charging cable lock controller is configured to start measurement with a timer at a point of time when the charging cable is unlocked and monitor a length of time in which the battery is being charged while the charging cable is unlocked; and
the charging cable lock controller is configured to output a charging cable auto-lock instruction to automatically lock the charging cable when a length of time measured by the timer reaches a time limit.

7. The charging cable lock controller according to claim 5 or 6, further comprising:
a communication interface used to communicate with a door lock control circuit that controls locking and unlocking of a vehicle door, wherein
the charging cable lock controller is configured to
output a charging cable normal locking instruction when the door lock control circuit performs a door locking operation,
output a charging cable normal unlocking instruction when the door lock control circuit performs a door unlocking operation, and
output the charging cable auto-lock instruction when a length of time measured by the timer reaches the time limit regardless of the door locking operation performed by the door lock control circuit.

8. A charging cable lock device adapted for use with a power supply port, which is connected to a charging cable, and a battery, which is charged through the charging cable, the charging cable lock device comprising:
a lock member that moves between a locking position, where the lock member locks and restricts removal of the charging cable to and from the power supply port, and an unlocking position, where the lock member unlocks the charging cable;
an actuator that moves the lock member between the locking position and the unlocking position; and
a charging cable lock controller connected to the actuator, wherein:
the charging cable lock controller is configured to monitor whether or not the charging cable is in a coupled state, in which the charging cable is coupled to the power supply port;
when the charging cable is in the coupled state, the charging cable lock controller is configured to start measurement with a timer at a point of time when the charging cable is unlocked and monitor a length of time in which the unlocked charging cable is in the coupled state; and
the charging cable lock controller is configured to provide the actuator with a charging cable auto-lock instruction to automatically lock the charging cable when the length of time measured by the timer reaches a time limit.

9. The charging cable lock device according to claim 8, wherein:
the charging cable lock controller is configured to monitor whether or not the battery is being charged through the charging cable;
when the battery is being charged, the charging cable lock controller is configured to start measurement with a timer at a point of time when the charging cable is unlocked and monitor a length of time in which the battery is being charged while the charging cable is unlocked; and
the charging cable lock controller is configured to output a charging cable auto-lock instruction to automatically lock the charging cable when the length of time measured by the timer reaches a time limit.

10. The charging cable lock device according to claim 8 or 9, wherein
the charging cable lock controller includes a communication interface used to communicate with a door lock control circuit that controls locking and unlocking of a vehicle door, and
the charging cable lock controller is configured to
provide the actuator with a charging cable normal locking instruction when the door lock control circuit performs a door locking operation,
provide the actuator with a charging cable normal unlocking instruction when the door lock control circuit performs a door unlocking operation, and
provide the actuator with the charging cable auto-lock instruction when the length of time measured by the timer reaches the time limit regardless of the door locking operation performed by the door lock control circuit.
